# EUROPÄISCHE PATENTSCHRIFT

(11) **EP 0 877 688 B1**
(45) Veröffentlichungstag und Bekanntmachung des Hinweises auf die Patenterteilung: **27.03.2002**
(21) Anmeldenummer: 96946239.9
(22) Anmeldetag: 12.12.1996
(51) Int. Cl.: B60T 8/36, B60T 13/68

(54) **ELEKTROMAGNETISCH BETÄTIGTES VENTIL, INSBESONDERE FÜR HYDRAULISCHE BREMSANLAGEN VON KRAFTFAHRZEUGEN**
ELECTROMAGNETICALLY ACTUATED VALVE, ESPECIALLY FOR HYDRAULIC MOTOR VEHICLE BRAKING SYSTEMS
SOUPAPE ACTIONNEE PAR VOIE ELECTROMAGNETIQUE, NOTAMMENT POUR SYSTEMES DE FREINAGE HYDRAULIQUES DE VEHICULES A MOTEUR

(30) Priorität: 07.02.1996 DE 19604315
(43) Veröffentlichungstag der Anmeldung: 18.11.1998
(73) Patentinhaber: ROBERT BOSCH GMBH, 70442 Stuttgart (DE)
(72) Erfinder: HOHL, Günther, D-70569 Stuttgart (DE); MITTWOLLEN, Norbert, D-71706 Markgröningen (DE); SOMMER, Dietmar, Charleston, SC 29418 (US)
(86) Internationale Anmeldenummer: DE9602399
(87) Internationale Veröffentlichungsnummer: WO9729000

(56) Entgegenhaltungen:
- DE-A- 3 502 276
- DE-A- 4 119 662
- DE-A- 4 412 648
- DE-A- 4 438 721

## Beschreibung

### Stand der Technik

Die Erfindung geht aus von einem elektromagnetisch betätigten Ventil nach der Gattung des Patentanspruchs 1.

Es ist schon ein solches Ventil bekannt (DE 44 12 648 A1), dessen Sitzventil unter der Wirkung einer Rückstellfeder seine Offenstellung einnimmt und magnetbetätigt in seine den Durchfluß von Druckmittel sperrende Stellung schaltbar ist. Das bekannte Ventil ist also von seiner Bauart her ein Schaltventil in der Form des kostengünstigen 2/2-Wegeventils. Darüberhinaus ist durch konstruktive Maßnahmen an Schließglied und Stößel erreicht, daß sich bei ausreichend großem Druckgefälle aus der Schließstellung des Sitzventils heraus aufgrund von hydraulischen Kräften selbsttätig eine teilgeschlossene Stellung einstellt, in welcher der Volumenstrom gemindert ist. Das bekannte Ventil ist daher vorteilhaft beispielsweise in schlupfgeregelten hydraulischen Bremsanlagen einsetzbar, um bei Druckaufbau z. B. einer Bremsschlupfregelung ein günstiges Verhalten hinsichtlich der Regelgüte und der Geräuschemission zu erzielen.

### Vorteile der Erfindung

Das erfindungsgemäße Ventil mit den kennzeichnenden Merkmalen hat demgegenüber den Vorteil, daß sich dieses, ähnlich einem Proportionalventil, durch Steuerung der Magnetkraft bei kleinen Hüben in beliebig viele Zwischenstellungen überführen läßt, ohne jedoch den aufwendigen Aufbau eines Proportionalventiles aufzuweisen. Diese Wirkungsweise ist im wesentlichen darauf zurückzuführen, daß am Schließglied angreifende hydraulische Kräfte aufgrund der Konfiguration von Ventilsitz und Schließglied hubabhängig veränderbar sind. Mit dem erfindungsgemäßen Ventil ist daher eine weitgehend kontinuierliche Durchflußsteuerung erzielbar. Es kann in vielen Anwendungsfällen anstelle von Proportionalventilen eingesetzt werden. Bei schlupfgeregelten Bremsanlagen ist durch die Anwendung des erfindungsgemäßen Ventils eine höhere Regelgüte und eine geringere Geräuschemission als bei dem bekannten Ventil zu erzielen.

Durch die in den Unteransprüchen aufgeführten Maßnahmen sind vorteilhafte Weiterbildungen und Verbesserungen des im Patentanspruch 1 angegebenen Ventils möglich.

Mit den in den Ansprüchen 2 und 3 gekennzeichneten Ausgestaltungen wird eine definierte Ablösung des Druckmittelstrahls erreicht. Instabile Strömungskräfte werden somit weitgehend vermieden.

### Zeichnung

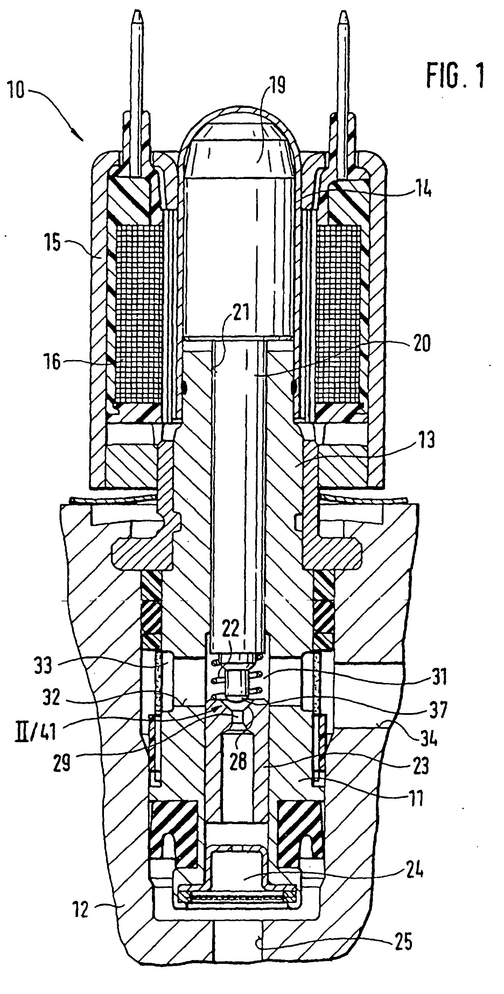

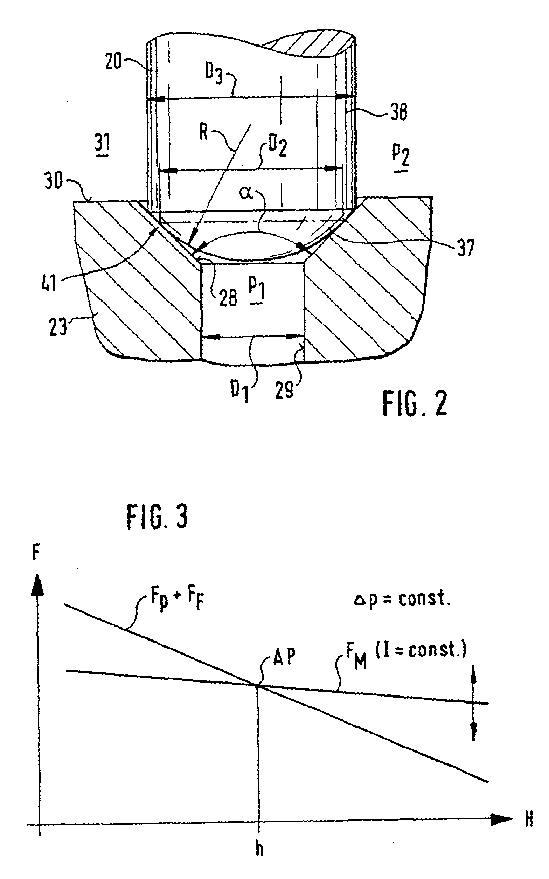

Ein Ausführungsbeispiel der Erfindung ist in der Zeichnung vereinfacht dargestellt und in der nachfolgenden Beschreibung näher erläutert. Es zeigen Figur 1 einen Längsschnitt eines elektromagnetisch betätigten Ventils mit einem Sitzventil, Figur 2 als Einzelheit II aus Figur 1 das in Schließstellung befindliche Sitzventil in gegenüber Figur 1 vergrößertem Maßstab und Figur 3 ein Diagramm der im Sitzventil über den Ventilöffnungshub wirkenden Kräfte.

### Beschreibung des Ausführungsbeispiels

Ein in Figur 1 der Zeichnung dargestelltes, elektromagnetisch betätigtes Ventil 10 hat ein Ventilgehäuse 11, mit dem es in einem Ventilblock 12 aufgenommen ist. Außerhalb des Ventilblocks 12 ist das Ventilgehäuse 11 in einem Polkern 13 fortgesetzt. Auf dem Polkern 13 ist ein hülsenförmiger Ventildom 14 druckdicht befestigt. Auf diesen sowie den Polkern 13 ist eine von einem magnetflußleitenden Gehäuse 15 umhüllte, ringförmige Magnetspule 16 aufgesteckt.

Im Ventildom 14 befindet sich ein längsbewegbarer Magnetanker 19. Dieser greift an einem Stößel 20 an, welcher in einer Längsbchrung 21 von Polkern 13 und Ventilgehäuse 11 aufgenommen ist. Eine Rückstellfeder 22 greift ankerabgewandt am längsbewegbaren Stößel 20 an.

Die Rückstellfeder 22 ist an einem in das Ventilgehäuse 11 eingepreßten, längsdurchbohrten Ventilkörper 23 abgestützt. Dieser steht mit einem Druckmitteleinlaß 24 des Ventils 10 in Verbindung, welcher mit einer Leitungsbohrung 25 des Ventilblocks 12 kommuniziert.

Der Ventilkörper 23 weist stößelseitig einen hohlkegelförmigen Ventilsitz 28 mit einem Kegelwinkel α von höchstens 110° auf (Figur 2). In den Ventilsitz 28 mündet zentrisch eine mit dem Druckmitteleinlaß 24 in Verbindung stehende Zuströmbohrung 29 mit dem Durchmesser D₁. Der Ventilsitz 28 endet radial außen scharfkantig an einer Stirnfläche 30, welche den Ventilkörper 23 gegen eine Ventilkammer 31 begrenzt und rechtwinklig zu einer Achse verläuft, in welcher der Ventilkörper 23, der Ventilsitz 28, der Stößel 20 und der Magnetanker 19 liegen. Die Ventilkammer 31 steht mit einer Querbohrung 32 in Verbindung, welche den Druckmittelauslaß 33 des Ventils 10 bildet und mit einer Leitungsbohrung 34 des Ventilblocks 12 kommuniziert. Die Längsbohrung 21 und der Ventildom 14 stehen mit der Ventilkammer 31 in druckmittelleitender Verbindung. Der Magnetanker 19 und der Stößel 20 sind daher druckmittelumspült.

Mit dem Ventilsitz 28 wirkt ein Schließglied 37 in der Form eines Kugelsegments zusammen. Das Schließglied 37 ist stirnseitig an einem im Durchmesser verringerten zylindrischen Abschnitt 38 des Stößels 20 in der Ventilkammer 31 ausgebildet. Der Kegelwinkel α des Ventilsitzes 28 und der Radius R des Schließglieds 37 sind derart aufeinander abgestimmt, daß der Dichtdurchmesser D₂ des Ventilsitzes wenigstens das 1,3-fache des Durchmessers D₁ der Zuströmbohrung 29 beträgt. Der Durchmesser D₃ des Stößelabschnitts 38 entspricht demgegenüber wenigstens annähernd dem Dichtdurchmesser D₂ des Ventilsitzes 28, d. h. der Stößelabschnitt 38 ist geringfügig größer als der Dichtdurchmesser. Der Übergang des Schließgliedes 37 zum Stößelabschnitt 38 ist scharfkantig ausgebildet. Außerdem ist in Figur 2 zu erkennen, daß der Auslauf des Ventilsitzes 28 etwa im Bereich des Durchmessers D₃ des Stößelabschnitts 38 liegt.

Der Ventilsitz 28 des Ventilkörpers 23 und das Schließglied 37 des Stößels 20 bilden ein Sitzventil 41, welches aufgrund der Wirkung der Rückstellfeder 22 bei fehlender Bestromung der Magnetspule 16 seine Durchlaßstellung einnimmt. Bestromt ist das Ventil 10 in die Schließstellung des Sitzventils 41 umschaltbar. Das elektromagnetisch betätigte Ventil 10 ist somit vom Prinzip her ein Schaltventil in der Form des 2/2-Wegeventils. Es ist in hydraulischen Bremsanlagen von Kraftfahrzeugen verwendbar, wie sie in der eingangs erwähnten Druckschrift DE 44 12 648 A1 angedeutet und in der Druckschrift DE 41 19 662 A1 hinsichtlich Schaltbild und Funktion ausführlich beschrieben sind. Bei einer solchen Verwendung ist der Druckmitteleinlaß 24 des Ventils 10 mit einem Hauptbremszylinder als Druckerzeuger der Bremsanlage und der Druckmittelauslaß 33 mit einer Radbremse als Druckverbraucher verbunden.

Herkömmliche Schaltventile unterscheiden sich vom erfindungsgemäßen Ventil, insbesondere von dessen Ausgestaltung des Sitzventils 41, auf folgende Weise: Die Zuströmbohrung 29 hat beim herkömmlichen Ventil einen Durchmesser D₁, welcher nahezu dem des Dichtdurchmessers D₂ entspricht. Da letzterer die Höhe der erforderlichen Magnetkraft zum Schließen des Ventils bestimmt, ist man beim herkömmlichen Sitzventil bestrebt, durch diese Durchmesserangleichung bei gegebener Magnetkraft einen maximalen Durchfluß zu erhalten. Außerdem werden beim herkömmlichen Sitzventil Kegelwinkel α größer als 90° gewählt, um als Schließglied 37 Kugeln größeren Durchmessers verwenden zu können, weil diese bei der Montage am Stößel 20 leichter handhabbar sind. Ferner strebt man beim herkömmlichen Sitzventil an, den Übergang zwischen der Kugelfläche des Schließglieds 37 und dem Stößel 20 kantenfrei zu gestalten. Schließlich hat bei der üblichen Auslegung des Magnetkreises beim herkömmlichen Ventil die Magnetkraft beim Übergang in die Schließstellung einen progressiven Verlauf.

Das erfindungsgemäße Ventil 10 unterscheidet sich demgegenüber in folgender Weise:

In der Schließstellung (Fig. 2) des Sitzventils 41 wirkt der zuströmseitige Druck p₁ auf eine vom Dichtdurchmesser D₂ umschriebene Wirkfläche des Stößelabschnitts 38 und übt eine öffnende Kraft auf den Stößel 20 aus. Der in der Ventilkammer 31 und im Ventildom 14 herrschende, abströmseitige Druck p₂ ist niedriger als der Druck p₁ und wirkt mit einer Kraft schließend auf den Stößel 20. Die aus diesen beiden Kräften resultierende hydraulische Kraft Fₚ wirkt somit auf den Stößel 20 öffnend. Mit einer Kraft F_{F} öffnend auf den Stößel 20 wirkt auch die als Schraubendruckfeder ausgebildete Rückstellfeder 22.

Beim Öffnen des Sitzventils 41 dringt das niedrigere Druckniveau p₂ in Richtung auf die Zuströmbohrung 29 vor. Unter der Voraussetzung einer konstanten Druckdifferenz zwischen p₁ und p₂ nimmt die resultierende hydraulische Kraft Fp über den zunehmenden Ventilöffnungshub H monoton fallend ab. Die üblicherweise gerade Kennlinie der Rückstellfeder 22 fällt über den Hub H ebenfalls ab. Beim Schließvorgang des Sitzventils 41 kehren sich die Verhältnisse entsprechend um.

Der Verlauf der additiv miteinander verknüpften Kräfte Fₚ und F_{F} über den Ventilöffnungshub H ist in Figur 3 in einem Diagramm angegeben, in welchem der Abszisse der Hub H und der Ordinate die Kraft F zugeordnet ist. Die Kennlinie dieser Summenkraft Fp und Fn hat einen relativ stark abfallenden Verlauf. Da dies im wesentlichen von der Änderung der hydraulischen Kraft Fₚ über den Ventilöffnungshub H und weniger von der Charakteristik der Rückstellfeder 22 abhängt, kann das Ventil 10 mit einer Feder geringer Federsteifigkeit ausgestattet werden, deren Vorspannung relativ unkritisch auf eine Größe einstellbar ist, die ausreicht, um den Magnetanker 19 und den Stößel 20 aus der Schließstellung des Sitzventils 41 in die Durchlaßstellung zu überführen.

Die Formgebung des Sitzventils 41 stellt sicher, daß der im Diagramm wiedergegebene Kennlinienverlauf F_{p +} F_{F} weitgehend frei von Störeinflüssen ist. So wird durch den relativ kleinen Kegelwinkel α des Ventilsitzes 28 eine geringe Umlenkung der Druckmittelstrahlen im Sitzventil 41 erreicht. Dadurch werden wenig Impulskräfte hervorgerufen, die insbesondere bei großen Durchflüssen auftreten. Die Abhängigkeit der Ventileigenschaften von Differenzdruck und Temperatur des Druckmittels ist daher gering. Ferner ist durch den scharfkantigen Übergang zwischen dem Schließglied 37 und dem Stößelabschnitt 38 sichergestellt, daß die Druckmittelströmung stets dort abreißt und somit zu gleichmäßigen Strömungskräften auf das Schließglied 37 führt. Zu einer stabilen Druckmittelströmung trägt auch der scharfkantige Auslauf des Ventilsitzes 28 an der Stirnfläche 30 des Ventilkörpers 23 bei. Die Wirkung der Druckmittelströmung auf die in der Ventilkammer 31 befindlichen Windungen der Rückstellfeder 22 ist daher weitgehend frei von störenden Einflüssen.

Der erwähnten hydraulischen Kraft Fₚ und der Federkraft F_{F} ist die durch Erregen der Magnetspule 16 erzeugte, in Schließrichtung des Sitzventils 41 wirkende Magnetkraft F_{M} entgegengerichtet. Wie deren Kennlinie im Diagramm nach Figur 3 zeigt, ist durch dem Fachmann geläufige Maßnahmen erreicht, daß bei einem bestimmten Erregerstrom I = konstant die Magnetkraft F_{M} über dem Ventilöffnungshub H ebenfalls einen monoton fallenden Verlauf annimmt, jedoch mit betragsmäßig geringerer negativer Steigung als ihn der Kraftverlauf F_{p +} F_{F} aufweist. Die flache Neigung der Kennlinie F_{M} ist beispielsweise durch entsprechende Ausbildung des Magnetkreises erzielbar, insbesondere wenn in der Schließstellung des Ventils 10 ein relativ großer Restluftspalt zwischen dem Magnetanker 19 und dem Polkern 13 verbleibt oder der Magnetanker und der Polkern als Tauchstufe ausgebildet sind. Die dargestellte Magnetkraft-Kennlinie ist für einen bestimmten Erregerstrom I = konstant repräsentativ. Durch abweichende Erregerströme sind in Richtung der Ordinate verlagerte Kennlinien erzeugbar. Geänderte Erregerströme sind durch Stromsteuerung, Pulsweitenmodulation und andere bekannte Verfahren einstellbar.

Die beiden Kennlinien Fₚ + F_{F} sowie F_{M} schneiden sich im Diagramm in einem Punkt, in dem Gleichgewicht zwischen der öffnenden hydraulischen Kraft Fₚ sowie der Federkraft F_{F} einerseits und der schließenden Magnetkraft F_{M} andererseits herrscht. Dieser Punkt ist als Arbeitspunkt AP bezeichnet, in dem das Sitzventil 41 beim Hub h eine stabile Stellung einnimmt. Eine in Richtung des Doppelpfeils im Diagramm durch Stromsteuerung verlagerte Magnetkraft-Kennlinie legt den Arbeitspunkt auf einen anderen Ventilöffnungshub. Das erfindungsgemäße Ventil 10 ist somit trotz seiner Bauform als Schaltventil ähnlich einem Proportionalventil stromabhängig mit variablem Öffnungshub stufenlos steuerbar. Diese Steuerbarkeit ist zumindest bei kleinen Ventilöffnungshüben gegeben.

Besonders vorteilhafte Verhältnisse hinsichtlich der Steuerung und des konstruktiven Aufwandes für den elektromagnetischen Teil des Ventils 10 ergeben sich, wenn der Ventilsitz 28 einen Kegelwinkel α von 90° und kleiner hat sowie der Dichtdurchmesser D₂ des Ventilsitzes 28 wenigstens das 1,5-fache des Durchmessers D₁ der Zuströmbohrung 29 beträgt.

Das erfindungsgemäße Ventil 10 ist in hydraulischen Bremsanlagen von Kraftfahrzeugen verwendbar, beispielsweise zur Bremsschlupf- oder Antriebsschlupfregelung oder in Bremsanlagen mit einer hydraulischen Servodruckquelle zur direkten Einsteuerung von Bremsdruck in Radbremszylinder. Mit dem Ventil 10 ist in vorteilhafter Weise eine stufenlose Druck- und Volumenstromregelung möglich, wenn die Bremsanlage mit entsprechenden Sensoren und einer Regelelektronik ausgestattet ist. Auch ist das Ventil 10 als Druckbegrenzungsventil verwendbar, indem durch Stromsteuerung der Ansprechdruck eingestellt wird, entweder auf konstante oder anwendungsabhängig veränderbare Werte.

## Patentansprüche

1. Elektromagnetisch betätigtes Ventil (10), insbesondere für hydraulische Bremsanlagen von Kraftfahrzeugen, mit den folgenden Merkmalen:
- es ist ein Sitzventil (41) zwischen einem Druckmitteleinlaß (24) und einem Druckmittelauslaß (33) vorgesehen,
- das Sitzventil (41) hat einen hohlkegelförmigen Ventilsitz (28) und ein Schließglied (37) in der Form eines Kugelsegments,
- der Kegelwinkel (α) des Ventilsitzes (28) beträgt höchstens 110°,
- in den Ventilsitz (28) mündet zentrisch eine mit dem Druckmitteleinlaß (24) in Verbindung stehende Zuströmbohrung (29),
- das Schließglied (37) ist mit scharfkantigem Übergang an der Stirnseite eines zylindrischen Abschnitts (38) eines Stößels (20) ausgebildet,
- am Stößel (20) greifen ein schließend auf das Sitzventil (41) wirkender Magnetanker (19) und eine öffnend wirkende Rückstellfeder (22) an,
**gekennzeichnet durch** die weiteren Merkmale:
- der Dichtdurchmesser (D₂) des Ventilsitzes (28) hat wenigstens das 1,3-fache des Durchmessers (D₁) der Zuströmbohrung (29),
- die auf den Magnetanker (19) ausgeübte, auf das Schließglied (37) übertragene Magnetkraft (F_{M}) ist stufenlos veränderbar, wobei deren Verlauf mit zunehmendem Ventilöffnungshub (H) monoton abfällt,
- die vom Druckmittel und der Rückstellfeder herrührende Kraft (F_{p +} F_{F}) am Schließglied (37) weist einen mit zunehmendem Ventilöffnungshub (H) monoton fallenden Verlauf auf, dessen Neigung betragsmäßig größer ist als diejenige des Magnetkraftverlaufs.

2. Ventil nach Anspruch 1, **dadurch gekennzeichnet, daß** der Ventilsitz (28) im Bereich des Durchmessers (D₃) des Stößelabschnitts (38) scharfkantig frei ausläuft.

3. Ventil nach Anspruch 2, **dadurch gekennzeichnet, daß** der Durchmesser (D₃) des Stößelabschnitts (38) wenigstens annähernd dem Dichtdurchmesser (D₂) des Ventilsitzes (28) entspricht.

## Claims

1. Electromagnetically actuated valve (10), in particular for hydraulic brake systems of motor vehicles, having the following features:
- a seat valve (41) is provided between a pressure-medium inlet (24) and a pressure-medium outlet (33),
- the seat valve (41) has a hollow-conical valve seat (28) and a closing member (37) in the form of a spherical segment,
- the cone angle (α) of the valve seat (28) is at most 110°,
- an inflow bore (29) connected to the pressure-medium inlet (24) issues centrally into the valve seat (28),
- the closing member (37) is designed with a sharp-edged transition on the end face of a cylindrical portion (38) of a tappet (20),
- a magnet armature (19) having a closing action on the seat valve (41) and a return spring (22) having an opening action engage on the tappet (20),
**characterized by** the further features:
- the sealing diameter (D₂) of the valve seat (28) is at least 1.3 times the diameter (D₁) of the inflow bore (29),
- the magnetic force (F_{M}) exerted on the magnet armature (19) and transmitted to the closing member (37) is infinitely variable, its profile decreasing monotonically with an increasing valve opening stroke (H),
- the force (Fₚ + F_{F}) on the closing member (37), originating from the pressure medium and the return spring, has a profile which decreases monotonically with an increasing valve opening stroke (H) and the inclination of which is greater in amount than that of the magnetic-force profile.

2. Valve according to Claim 1, **characterized in that** the valve seat (28) runs out freely, sharp-edged, in the region of the diameter (D₃) of the tappet portion (38).

3. Valve according to Claim 2, **characterized in that** the diameter (D₃) of the tappet portion (38) corresponds at least approximately to the sealing diameter (D₂) of the valve seat (28).

## Revendications

1. Soupape à commande électromagnétique, notamment pour systèmes hydrauliques de freinage de véhicules automobiles,
dans laquelle :
- il est prévu une soupape à siège (41) entre une entrée de fluide sous pression (24) et une sortie de fluide sous pression (33),
- la soupape à siège (41) a un siège (28) conique creusé en cône et un organe de fermeture (37) en forme de calotte sphérique,
- l'angle α du cône du siège de soupape (28) est de 110° au plus,
- dans le siège de soupape (28) débouche centralement un alésage d'entrée (29) relié à l'entrée (24) de fluide sous pression,
- l'organe de fermeture (37) est formé, avec une arête de transition, sur la face frontale d'une section cylindrique (38) d'un poussoir (20),
- sur le poussoir (20) agissent une armature magnétique (19) agissant sur la soupape (41) dans le sens de fermeture, et un ressort de rappel (22) agissant dans le sens d'ouverture,
**caractérisée en ce que**
- le diamètre (D2), de la portée d'étanchéité du siège de soupape (28) est au moins égal à 1,3 fois le diamètre (D1) de l'alésage d'entrée (29),
- la force magnétique (F_{M}) exercée sur l'armature magnétique (19) est transmise à l'organe de fermeture (37) est variable en continu, et son intensité décroît de manière monotone quand croît la course (H) d'ouverture de la soupape, et
- la force (Fₚ + F_{F}) sur l'organe de fermeture (37), résultant de l'action du fluide de pression et de l'action du ressort de rappel présente, quand la course d'ouverture (H) de la soupape augmente, une décroissante monotone selon une courbe dont la pente est supérieure à celle de la courbe représentant la force magnétique.

2. Soupape selon la revendication 1,
**caractérisée en ce que**
le siège de soupape (28), dans la zone du diamètre (D3) de la section (38) du poussoir, se termine par une arête libre.

3. Soupape selon la revendication 2,
**caractérisée en ce que**
le diamètre (D3) de la section du poussoir (38) correspond au moins approximativement au diamètre (D2) de la portée d'étanchéité du siège de soupape (28).
